# EUROPÄISCHE PATENTSCHRIFT

(11) **EP 2 824 526 B1**
(45) Veröffentlichungstag und Bekanntmachung des Hinweises auf die Patenterteilung: **19.08.2020**
(21) Anmeldenummer: 14176978.6
(22) Anmeldetag: 21.05.2008
(51) Int. Cl.: G05B 19/418

(54) **Spannrahmenloses Fügen von Bauteilen**
Clamping frame-less joining of components
Jointoiement de composants sans cadre de serrage

(43) Veröffentlichungstag der Anmeldung: 14.01.2015
(62) Teilanmeldung aus: 08758679.8
(73) Patentinhaber: FFT Produktionssysteme GmbH & Co. KG, 36041 Fulda (DE)
(72) Erfinder: Hahl, Manfred, 36163 Poppenhausen (DE)
(74) Vertreter: SSM Sandmair

(56) Entgegenhaltungen:
- DE-A1- 4 418 755
- DE-A1-102004 049 332
- US-A- 5 155 690
- US-A- 5 889 925
- US-B1- 6 167 607

## Beschreibung

Die Erfindung betrifft ein Verfahren zum Fügen von Bauteilen, bei dem eine Halteeinrichtung ein erstes Bauteil hält, ein Positionier-Roboter ein zweites Bauteil relativ zu dem ersten Bauteil in einer Fügeposition positioniert und in der Fügeposition gegen das erste Bauteil drückt, die Bauteile mittels des Positionier-Roboters durch Kontakt nur der Bauteile in der Fügeposition gegeneinander gespannt werden, und die Bauteile in der relativ zueinander nur durch den Bauteilkontakt bestimmten Fügeposition gefügt werden, wobei das erste Bauteil an einer Markierungsstelle mit einer ersten Marke und das zweite Bauteil an einer Markierungsstelle, die vorzugsweise kongruent zu der Markierungsstelle des ersten Bauteils geformt ist, mit einer zweiten Marke versehen ist, die Marken bei dem Positionieren der Bauteile mittels eines Sensors erfasst werden, und wobei die Position, die die erste Marke relativ zu der zweiten Marke einnimmt, ermittelt wird, und der oder die Roboter die Bauteile in Abhängigkeit von der ermittelten Relativposition der Marken in der Fügeposition positioniert oder positionieren.

Aus Karosserieteilen zusammengesetzte Rohkarossen von Automobilen werden in der Serienfertigung zum Fügen gespannt, üblicherweise mittels eines Spannrahmens, der in einer Geometriestation längs einer Fertigungslinie angeordnet ist und dem im Takt der Serienfertigung die gehefteten Rohkarossen zugeführt werden. Beispiele für ein derartiges Spannen sind aus der DE 195 33 389 B4 und der EP 1 015 299 B1 bekannt.
Aus der DE 10 2004 012592 B4 sind ein Verfahren und eine Vorrichtung zum lagegenauen Positionieren von zu fügenden Bauteilen mittels Roboter bekannt. Zum Spannen zweier Bauteile werden zwei Roboter verwendet, von denen jeder eine Bauteilgreifeinheit trägt. Die beiden miteinander zu fügenden Bauteile werden mittels jeweils einer der Greifeinheiten aufgenommen, die Greifeinheiten werden relativ zueinander lagegenau positioniert und mechanisch miteinander gekoppelt. Im positionierten und gekoppelten Zustand der Greifeinheiten sind die von den Greifeinheiten gehaltenen Bauteile automatisch relativ zueinander für das Fügen lagegenau positioniert. Die Greifeinheiten bilden im gekoppelten Zustand einen Spannrahmen, der im Unterschied zu dem stationären Spannrahmen konventioneller Geometriestationen mit den gehaltenen Bauteilen im Raum beweglich ist, wobei die beiden Roboter nach dem sogenannten Master-Slave-Prinzip gesteuert werden.

Im Spannrahmen, sowohl dem stationären als auch mobilen Spannrahmen, sind die miteinander zu fügenden Bauteile fest zueinander gespannt, wie der Begriff "Spannrahmen" bereits besagt, fest im Rahmen gespannt. Aufgrund der geometrischen Ungenauigkeiten der Bauteile, beispielsweise aufgrund der unvermeidbaren Toleranzen und auch durch zum Teil erst gar nicht tolerierten Maßen, werden die Bauteile durch das Spannen elastisch verformt und zeigen daher nach dem Fügen und Lösen des Spannrahmens ein Aufspringverhalten, d.h. sie federn wieder zurück. Ein weiteres Problem ist der Verschleiß von Positionierelementen der Spannrahmen oder Spannrahmenteile. Positionierstifte der Spannrahmen werden beispielsweise beim Aufnehmen der Bauteile durch Reibverschleiß abgenutzt. Entsprechend verringert sich die Genauigkeit der Positionierung.

Ein weiteres Beispiel für ein derartiges verfahren beschreibt die US 6 617 607 B2, das Markierungspunkte auf oder an den Kameras, Werkzeugen oder zumindest einem Bauteil nutzt, um zwei Teile, die miteinander gefügt werden sollen, relativ zueinander auszurichten. Weitere Fügeverfahren, die ohne Markierungen auskommen, zeigen die US 5 155 690 A, die US 5 889 925 A und die DE 10 2004 049 332 A1.
Es ist eine Aufgabe der Erfindung, den Verzug und die Gefahr des Aufspringens eines Verbunds gefügter Bauteile zu vermindern.

Diese Aufgabe wird durch das Verfahren mit den Merkmalen des Anspruchs 1 gelöst. Die von Anspruch 1 abhängigen Ansprüche betreffen vorteilhafte Fortbildungen des in Anspruch 1 offenbarten Verfahrens.

Die Erfindung hat ein Verfahren zum Fügen von Bauteilen zum Gegenstand, bei dem ein Halte-Roboter ein erstes Bauteil im Raum hält, wobei das Halten ein Bewegen des gehaltenen Bauteils im Raum beinhalten kann. Ein Positionier-Roboter positioniert ein zweites Bauteil im Raum relativ zu dem ersten Bauteil in einer Fügeposition, in der die Bauteile relativ zueinander für das Fügen gespannt werden. Vorzugsweise hält der Halte-Roboter das erste Bauteil abgesehen von unvermeidbaren, beispielsweise in einer Elastizität eines Roboterarms begründeten Bewegungen im Raum absolut still, bis die Bauteile in der Fügeposition relativ zueinander fixiert sind. Die beiden Roboter operieren vorzugsweise in einem Master-Slave-Modus, in dem der Halte-Roboter als bewegungsführender Master und der Positionier-Roboter als bewegungsgeführter Slave betrieben wird. Als Fügeposition wird eine Position verstanden, die die Bauteile relativ zueinander bei dem Fügen einnehmen. Der Begriff "Position" umfasst Ort und Ausrichtung, solange sich aus dem jeweils konkreten Zusammenhang keine eingeschränkte Bedeutung ergibt. Die Bauteile sind jedenfalls sowohl dem Ort als auch der Ausrichtung nach relativ zueinander positioniert, wenn sie die Fügeposition einnehmen. Die Fügeposition kann im Arbeitsraum der Roboter ortsfest sein. Ein Vorteil des Spannens mittels Roboter ist jedoch, dass die Fügeposition im Arbeitsraum auch verändert werden kann, wobei die Bauteile relativ zueinander die Fügeposition beibehalten, indem die Roboter entsprechend koordinierte Bewegungen ausführen.

Die Verwendung eines Halte-Roboters kommt im Automobilbau vor allem für das Fügen von Karosserieteilen und An- oder Einbauteilen jeweils aus Teilstrukturen in Frage, beispielsweise einer Tür, eines Schiebedachs oder einer Heckverkleidung aus einem Innen- und einem Außenteil. Für das Fügen einer Rohkarosse wird vorzugsweise anstelle des Halte-Roboters eine Halteeinrichtung verwendet, die stabiler oder in einer Fertigungslinie von Hause aus vorhanden ist und dort der Förderung einer Bodengruppe einer Rohkarosse und nach dem Fügen der Weiterförderung der gefügten Rohkarosse dient. Solch eine Halteeinrichtung kann insbesondere eine Auflage bilden, auf der die Bodengruppe oder Rohkarosse mit ihrem Gewicht ruht und geklemmt sein kann.

Nach der Erfindung werden die Bauteile in der Fügeposition durch Kontakt nur der Bauteile aneinander fixiert, in diesem Sinne gegeneinander gespannt, und in der relativ zueinander nur durch den Bauteilkontakt bestimmten Fügeposition gefügt. Zum Spannen der Bauteile wird kein Spannrahmen verwendet, der die Bauteile einzwängen und in den Bauteilen mechanische Spannungen erzeugen würde, deren Größe von der Formtreue der Bauteile nicht nur im Vergleich der Bauteile untereinander, sondern auch in Bezug auf den Spannrahmen abhinge. Soweit die Bauteile von einer Sollform abweichen, entstehen Spannungen im fixierten Zustand bzw. gefügten Verbund nur aufgrund des Zusammenhalts der Bauteile. Diese Spannungen sind kleiner als die Spannungen in einem Verbund, dessen Bauteile beim Fügen in einem Spannrahmen und nicht nur aneinander gespannt waren. Bei dem erfindungsgemäßen Verfahren können Abweichungen von der Sollform ferner zu einem Teil zwischen den Bauteilen ausgeglichen werden, was durch einen Spannrahmen verhindert wird, da die Abweichungen auch immer zu dem als nicht verformbar anzusehenden Spannrahmen bestehen. Die Bauteile werden zum Spannen vorzugsweise nur längs einer Achse gegeneinandergedrückt, können grundsätzlich aber auch mittels Presskräften gegeneinander gespannt werden, die in unterschiedlichen Richtungen wirken.

Ein weiterer Vorteil des spannrahmenlosen Spannens ist der Entfall von Verschleiß von Positioniermitteln. Beim Spannen von Bauteilen in einem Spannrahmen werden die Spannrahmenteile durch formschlüssig zusammenwirkende Positioniermittel relativ zueinander positioniert, beispielsweise mittels Positionierstiften und damit zusammenwirkenden Positionierlöchern oder -vertiefungen. Derartige Positioniermittel unterliegen beachtlichem Verschleiß, der durch die Erfindung vermieden wird.

Die Erfindung eignet sich zum Spannen großflächiger, nicht absolut steifer Bauteile, insbesondere dreidimensional gewölbter Strukturen aus flächenhaftem Material, beispielsweise Blechstrukturen. Diese Bauteile weisen eine erhebliche Formelastizität auf und können beim Spannen im Rahmen beträchtlich verformt werden. Derartige Strukturen werden im Fahrzeugbau gefügt, beispielsweise Karosserieteile zu Rohkarossen und aus mehreren Teilstrukturen zusammengesetzte An- und Einbauteile von Karosserien, wie etwa Türen, Hauben, Schiebedächer und Heckklappen. Neben dem Automobilbau ist auch der Flugzeugbau, der Bau von Schienenfahrzeugen, der Boots- und Schiffsbau zu nennen, wo ebenfalls Schalenstrukturen gefügt werden. Die Erfindung findet zwar bevorzugt im Fahrzeugbau Verwendung, ist hierauf aber nicht beschränkt. Im Automobilbau und dort in der Serienfertigung sind die Vorteile der Erfindung jedoch am größten.

Gegenstand der Erfindung ist auch eine Vorrichtung zum Positionieren von zu fügenden Bauteilen, vorzugsweise zur Durchführung des Verfahrens. Die Vorrichtung umfasst einen Halte-Roboter mit einem ersten Greifwerkzeug für das erste Bauteil, einen Positionier-Roboter mit einem zweiten Greifwerkzeug für das zweite Bauteil und eine Steuerung für den Positionier-Roboter. Die Roboter können je mit einer eigenen Steuerung ausgestattet oder es kann eine für die Roboter gemeinsame Steuerung vorgesehen sein. Anstelle des Halte-Roboters oder zusätzlich kann die Vorrichtung zum Halten des ersten Bauteils eine andere Halteeinrichtung beinhalten, wie sie vorstehend bereits beschrieben wurde. Der Positionier-Roboter weist an einem Roboterarm vorteilhafterweise einen Anschluss zum automatischen An- und Abdocken seines Greifwerkzeugs auf. Sind für das Positionieren mehrere Roboter vorgesehen, etwa der Halte-Roboter und der Positionier-Roboter oder mehrere Positionier-Roboter, gilt dies vorzugsweise für jeden dieser Roboter. Der oder die Roboter kann oder können insbesondere Industrieroboter sein mit einer ortsfesten Basis und einem Roboterarm, der im Raum vorzugsweise in allen sechs Freiheitsgraden beweglich und an seinem freien Ende mit dem Anschluss versehen ist. Das Greifwerkzeug oder jedes der mehreren Greifwerkzeuge weist eine Trägerstruktur für den Anschluss an den Roboter und einen an der Trägerstruktur angeordneten Greifer zum Greifen des jeweiligen Bauteils auf, beispielsweise einen Sauggreifer. Vorzugsweise sind an der Trägerstruktur mehrere Greifer, vorzugsweise Sauggreifer, angeordnet, um großflächige Bauteile an mehreren Stellen zu halten.

Die Steuerung ist dazu eingerichtet, den Positionier-Roboter so zu steuern, dass dieser das von seinem Greifwerkzeug gehaltene zweite Bauteil in Kontakt mit dem ersten Bauteil bringt und relativ zu dem ersten Bauteil in einer durch den Kontakt nur der Bauteile bestimmten Fügeposition positioniert und gegen das erste Bauteil spannt. Die Vorrichtung eignet sich für die Durchführung des erfindungsgemäßen Verfahrens, zumindest für den das Positionieren und Spannen der Bauteile betreffenden Teil des Verfahrens.

Für das Positionieren großer Bauteile, beispielsweise eines Seitenteils einer Rohkarosse, ist es von Vorteil, wenn solch ein zweites Bauteil von mehreren Positionier-Robotern gleichzeitig gehalten wird. Die Positionier-Roboter werden von der Steuerung in Bezug auf den Bewegungsablauf aufeinander abgestimmt gesteuert, so dass sie gemeinsam miteinander das zweite Bauteil relativ zu dem ersten Bauteil in der Fügeposition positionieren, in abgestimmter Weise gegen das erste Bauteil drücken und so im Kontakt nur der Bauteile spannen. Die Steuerung kann funktional, optional auch räumlich, in Steuerungseinheiten unterteilt sein, beispielsweise eine Steuerungseinheit pro Roboter und eine übergeordnete Steuerungseinheit für die Koordination der Bewegungen mehrerer Roboter. Soweit Merkmale nur in Bezug auf einen Positionier-Roboter offenbart werden, geschieht dies stellvertretend auch für jeden weiteren Positionier-Roboter, wobei die Positionier-Roboter und deren Ausrüstung für die Durchführung des Verfahrens vorteilhafterweise gleich sein können, aber nicht gleich sein müssen.

Das Greifwerkzeug ist bevorzugt so eingerichtet, dass es das zugeordnete Bauteil nur an einer von dem jeweils anderen Bauteil abgewandten Rückseite hält. Es bildet daher keine Störkonturen für das oder die Fügewerkzeug(e). Zweckmäßig ist in diesem Sinne ferner, wenn vom Greifwerkzeug keine Struktur über das gehaltene Bauteil hinaus in Richtung auf das jeweils andere Bauteil vorragt, was aufgrund der spannrahmenlosen Fixierung ohne weiteres verwirklicht werden kann. Werden zum Positionieren mehrere Roboter verwendet, gelten die Aussagen für jedes der Greifwerkzeuge.

In einer Weiterentwicklung umfasst die Vorrichtung auch ein oder mehrere Fügewerkzeug(e), beispielsweise Schweiß- oder Klebewerkzeug(e). Das oder die Fügewerkzeug(e) kann oder können ebenfalls an einem Arm eines Roboters angeordnet und daher im Raum beweglich oder stationär angeordnet sein. Das Wort "oder" wird von der Erfindung im üblichen logischen Sinne eines "inklusiv oder" verstanden, umfasst also sowohl die Bedeutung von "entweder ... oder" als auch die Bedeutung von "und", soweit der jeweils konkrete Zusammenhang nicht ausschließlich nur eine eingeschränkte Bedeutung zulässt. Auf den Fall mehrerer Fügewerkzeuge bezogen bedeutet dies, dass diese Fügewerkzeuge (i) alle beweglich oder stattdessen (ii) alle stationär oder aber (iii) eines oder mehrere der Fügewerkzeuge beweglich und ein anderes oder mehrere andere der Fügewerkzeuge stationär angeordnet sein können.

Einer der Roboter, bevorzugt der Positionier-Roboter, kann mit Vorteil ein taktil fühlender Roboter sein. Er weist in solch einer Weiterentwicklung einen Sensor zur Erfassung einer Kraft auf, mit der die Bauteile gegeneinander gespannt werden. Der Sensor, im folgenden auch Kraftsensor genannt, kann am Roboter angeordnet sein, beispielsweise in einem Gelenk des Roboters. Alternativ oder zusätzlich zu einem reinen Sensor kann ein Motor des Roboters als Kraftsensor dienen, indem dessen Stromaufnahme als Sensorsignal verwendet wird. Der Kraftsensor kann an dem Anschluss für das Greifwerkzeug oder an einem zweiten Anschluss des Roboters separat neben dem Greifwerkzeug oder stattdessen auch im Anschlussbereich zwischen Roboter und Greifwerkzeug, oder am Greifwerkzeug angeordnet sein. Die Anordnung am Greifwerkzeug wird bevorzugt, insbesondere eine Anordnung an oder nahe bei einer Kontaktstelle der Bauteile. Der Kraftsensor ist so angeordnet, dass das von dem fühlenden Roboter gehaltene Bauteil über den Sensor gegen das andere Bauteil gedrückt wird, der Sensor also im Kraftfluss zwischen dem Roboter und dem vom Greifwerkzeug gehaltenen Bauteil, vorzugsweise zwischen dem Greifwerkzeug und dem Bauteil, angeordnet ist. So kann ein das Bauteil haltender Greifer des Greifwerkzeugs über den Kraftsensor an der Trägerstruktur des Greifwerkzeugs abgestützt sein. Der Kraftsensor kann an der Trägerstruktur aber auch beabstandet vom Greifer angeordnet sein. Der Sensor kann beispielsweise als Kraftmessdose mit Dehnmess-Aufhehmer oder als Fluiddrucksensor gebildet sein.

Der Kraftsensor ist mit der Steuerung für den Roboter verbunden. Er liefert ein die Anpresskraft repräsentierendes Signal, das die Steuerung mit einem Sollwert für die Anpresskraft vergleicht. Erreicht die Presskraft beim Andrücken den Sollwert, wird die Anpresskraft bei diesem Wert gehalten bis die Bauteile durch den Fügeprozess in der relativen Fügeposition dauerhaft fest miteinander verbunden wurden. Statt des Positionier-Roboters kann auch der Halte-Roboter wie vorstehend beschrieben zu einem fühlenden Roboter weiterentwickelt sein. Grundsätzlich können auch beide Roboter jeweils fühlende Roboter im vorstehend beschriebenen Sinne sein. Nur den einzigen oder mehrere Positionier-Roboter zu jeweils einem fühlenden Roboter weiterzubilden wird jedoch bevorzugt, wenn dieser oder die mehreren die für das Positionieren in der Fügeposition erforderlichen Bewegungen ausführt oder ausführen.

An einem der Greifwerkzeuge, vorzugsweise des Positionier-Roboters, ist in bevorzugten Ausführungen ein Stößel angeordnet, der beim Spannen das von dem Greifwerkzeug gehaltene Bauteil gegen das andere drückt. Der Stößel ist vorteilhafterweise in Richtung einer von ihm auf das Bauteil ausübbaren Anpresskraft beweglich an dem Greifwerkzeug abgestützt. Am Greifwerkzeug kann eine Antriebseinrichtung für den Stößel angeordnet sein, um den Stößel aus- und einfahren zu können, beispielsweise ein Elektromotor oder eine Pneumatikeinheit. Zusätzlich oder stattdessen kann er mittels einer mechanischen Feder oder Druckgas, vorzugsweise Druckluft, elastisch nachgiebig abgestützt sein. Der Stößel kann aber auch nur einfach starr, unbeweglich angeordnet sein. Der Stößel ist bei dem Spannen vorzugsweise nur in Druckkontakt mit dem Bauteil, während ein oder bevorzugt mehrere Greifer das Bauteil halten, vorteilhafterweise auch in der Lage sind, das Bauteil hängend zu halten. Der Stößel ist vorzugsweise als Konturstein gebildet, der an einem freien Ende an die Form des Bauteils am Ort des Anpressens angepasst geformt ist.

Der Stößel wirkt in bevorzugten Ausführungen auf einen Kraftaufnehmer des Kraftsensors, so dass dieser die vom Stößel auf das Bauteil ausgeübte Anpresskraft aufnimmt. Der Kraftaufnehmer kann ein Druckaufnehmer sein, insbesondere in Ausführungen, in denen der Stößel mittels Druckgas gefedert oder antreibbar ist. Der Aufnehmer kann beispielsweise auch ein Dehnmess-Aufnehmer sein. Eine bevorzugte Lösung ist eine zwar grundsätzlich bewegliche Anordnung des Stößels, allerdings mit einem solch kurzen Hub, dass der Stößel als starr angesehen werden kann. Die Beweglichkeit dient lediglich dazu, den Kraftaufnehmer des Kraftsensors, beispielsweise einen Dehnmess-Aufnehmer, mit der Reaktionskraft aus der Anpresskraft zu beaufschlagen und dadurch elastisch zu verformen. Obgleich der Stößel mit Vorteil als Eingangselement des Kraftsensors verwendet werden kann, ist das Anpressen mittels Stößel auch grundsätzlich von Vorteil und nicht nur in der Doppelfunktion als Anpresselement und Sensor-Eingangselement.

Der taktil fühlende Roboter kann mit einem einzigen Kraftsensor ausgestattet sein. Bevorzugt sind jedoch mehrere Kraftsensoren an unterschiedlichen Orten angeordnet. Es kann sich um Sensoren der gleichen Art, vorteilhafterweise auch um untereinander identische Sensoren handeln. Es können auch Kraftsensoren unterschiedlicher Art verwendet werden, insbesondere Sensoren der vorstehend genannten Arten. Am Greifwerkzeug kann ein einziger Stößel angeordnet sein. Bevorzugter sind mehrere Stößel wie vorstehend beschrieben vorgesehen. Die Stößel können der Art nach gleich oder unterschiedlich sein. Sie sind vorteilhafterweise längs eines Fügeflansches des Bauteils entweder innerhalb des Fügeflansches oder in dessen Nähe angeordnet, so dass sie das Bauteil an Stellen gegen das andere drücken, die nahe bei den Orten, Linien oder Flächen liegen, an denen die Bauteile in der Fügeposition gefügt werden.

Die Bauteile werden in der mittels des wenigstens einen Positionier-Roboters gehaltenen Fügeposition, die ortsfest oder im Raum veränderlich sein kann, vorzugsweise an mehreren Stellen gefügt, beispielsweise durch Punktschweißen. Alternativ oder zusätzlich zu einem oder mehreren stoffschlüssigen Fügeverfahren, wie Schweißen, Löten und Kleben, kann oder können auch ein oder mehrere andere Fügeverfahren zum Einsatz gelangen, insbesondere Rollfalzen, gegebenenfalls Nieten oder Schrauben. So können die Bauteile insbesondere in mehreren nacheinander oder gleichzeitig ausgeführten Fügeoperationen gefügt werden. Die Fügeoperationen können der Art nach gleich oder unterschiedlich sein. Werden die Bauteile in mehreren unterschiedlichen Fügeprozessen gefügt, die nacheinander durchgeführt werden, halten die Halteeinrichtung und der wenigstens eine Positionier-Roboter die Bauteile zumindest während des ersten Fügeprozesses, in dem die Bauteile geometriebildend fest miteinander verbunden werden, in der Fügeposition. Die mehreren Fügeprozesse können insbesondere ein geometriebildendes Punktschweißen und ein nachgeschaltetes Ausschweißen beinhalten. Die Halteeinrichtung und der wenigstens eine Positionier-Roboter halten die Bauteile wie gesagt zumindest bei einem ersten, geometriebildenden Fügeprozess, können mit Vorteil aber auch für die Handhabung des hierdurch erhaltenen Verbunds bei einem oder mehreren nachgeschalteten Fügeprozessen verwendet werden.

Für das Positionieren weist die Vorrichtung in bevorzugten Ausführungen einen mit der Steuerung verbundenen Positionier-Sensor auf zur Erfassung der Position, die die gehaltenen Bauteile relativ zueinander einnehmen. Der Positionier-Sensor kann an einem weiteren Roboter oder auch stationär angeordnet sein. Er kann auch an dem Halte-Roboter angeordnet sein. Vorzugsweise ist er aber an dem Positionier-Roboter angeordnet. Kommen mehrere Positionier-Roboter zum Einsatz, ist vorzugsweise jeder dieser Roboter mit wenigstens einem Positionier-Sensor ausgestattet. Der Positionier-Sensor kann insbesondere am Greifwerkzeug, vorteilhafterweise an dessen Trägerstruktur, angeordnet sein. Bei dem Sensor handelt es sich vorzugsweise um einen optischen Sensor, beispielsweise einen einfachen Abstandssensor oder bevorzugter eine Kamera. Der Sensor ist über eine Signalverarbeitung, vorzugsweise Bildverarbeitung, mit der Steuerung verbunden. Die Signalverarbeitung kann integrierter Bestandteil entweder des Sensors oder der Steuerung oder als separates Modul vorgesehen sein. Die Vorrichtung kann zwei oder auch mehr Positionier-Sensoren aufweisen, für die das vorstehend Gesagte jeweils gilt.

Die Signalverarbeitung für den oder die Positions-Sensor(en) kann örtlich gesehen Bestandteil der Steuerung sein. Alternativ kann eine Signalverarbeitungseinrichtung jedoch auch am Positionier-Roboter, insbesondere an dessen Greifwerkzeug angeordnet sein. Vorteilhafte Anordnungen eines optischen Sensors mit einer am Roboter, vorzugsweise auf dem Greifwerkzeug und noch bevorzugter unmittelbar beim Sensor angeordneten Bildverarbeitung sind aus der DE 10 2006 003 555 A1 und der DE 10 2006 003 556 B bekannt, die für solche Weiterbildungen des Positionier-Sensors in Bezug genommen werden.

Um die Bauteile relativ zueinander zu positionieren, können geeignete Konturen der Bauteile messtechnisch erfasst werden. Der Positionierung kommt im Fahrzeugbau erhebliche Bedeutung zu. Im Automobilbau beispielsweise wird Exaktheit vor allem für Sichtkanten gefordert. Zum Positionieren in der Fügeposition können die betreffenden Kanten vermessen werden und deren Position relativ zueinander die Fügeposition bestimmen. Konturen, die von Hause aus an den Bauteilen vorhanden sind, liegen in vielen Fällen so weit auseinander, dass die Erfassung langwierig ist oder eine Mehrzahl von Sensoren und eine entsprechend aufwändige signal- und datentechnische Verarbeitung erfordert. Problematisch wird es, wenn die Bauteile nur eine geringe Formtreue aufweisen, die Position einer kritischen Kante oder einer anderen hinsichtlich der Genauigkeit maßgeblichen Bauteilstelle also von Bauteil zu Bauteil variiert.

Daher sind in bevorzugten Ausführungen das erste Bauteil an einer Markierungsstelle mit einer ersten Marke und das zweite Bauteil an einer Markierungsstelle mit einer zweiten Marke versehen. Die Marken werden bei dem Positionieren der Bauteile mittels des Positionier-Sensors erfasst. Die Position, welche die erste Marke relativ zu der zweiten Marke einnimmt, wird ermittelt, und die Bauteile werden in Abhängigkeit von der ermittelten Relativposition der Marken in der Fügeposition positioniert. Vorzugsweise bringt der oder bringen die mehreren Roboter die Markierungsstellen der Bauteile in der Fügeposition miteinander in Kontakt. Die Marken sind in derartigen Ausführungen im Bereich des Kontakts der Bauteile angeordnet und die Position, welche die erste Marke relativ zu der zweiten Marke einnimmt, wird zumindest auch im Kontakt der Markierungsstellen sensorisch erfasst.

Bevorzugt sind die Marken so gestaltet und die Markierungsstellen der Bauteile so gewählt, dass die Marke des ersten Bauteils und die zugeordnete Marke des zweiten Bauteils zumindest in der Fügeposition gleichzeitig und jeweils vollständig von nur einem einzigen Positions-Sensor erfasst werden können.

Die Erfindung ist auch auf ein System aus ersten und zweiten Bauteilen der beschriebenen Art gerichtet, die zur Vereinfachung und zur Erhöhung der Genauigkeit des Positionierens mit jeweils wenigstens einer Marke versehen sind, das erste Bauteil an einer Markierungsstelle mit einer ersten Marke und das zweite Bauteil an einer Markierungsstelle mit einer zweiten Marke. Die Marken sind vorteilhafterweise so gestaltet und die Markierungsstellen so gewählt sind, dass die einander zugeordneten Marken zumindest in der Fügeposition der Bauteile gleichzeitig und vollständig von nur einem einzigen Sensor erfasst werden können. Ferner sind sie in bevorzugten Ausführungen so gestaltet, dass anhand ihrer Position relativ zueinander die relative Position der Markierungsstellen in Bezug auf zwei Translationsachsen und vorzugsweise auch in Bezug auf eine zu den Translationsachsen orthogonale Rotationsachse bestimmbar ist.

Das zweite Bauteil ist im Bereich seiner Markierungsstelle vorzugsweise kongruent zu der Markierungsstelle des ersten Bauteils geformt. Die Markierungsstellen können insbesondere eben sein. Die Markierungsstellen sind vorzugsweise im Kontaktbereich der Bauteile angeordnet. Eine kongruente Form der Markierungsstellen hat den Vorteil, dass die Markierungsstellen mit den Marken in der Fügeposition der Bauteile flächig aufeinander liegen können und die Marken dann einen geringstmöglichen Abstand in Tiefenrichtung des Sensors aufweisen.

Die Marken sind in bevorzugten Ausführungen linienförmig. Sie können im jeweiligen Bauteil als Durchgang geformt sein, beispielsweise als rundes Loch oder als Polygon oder als eine Ausklinkung an einem Rand des betreffenden Bauteils. Linienförmig sind bei derartigen Marken die Randkanten oder im Falle eines runden Lochs oder einer runden Ausnehmung am Rand die umlaufende Randkante, die auch die eigentliche Marke bildet oder bilden, die vom Positionier-Sensor erfasst wird oder werden. Alternativ kann auch eine der Marken oder können beide aufeinander abgestimmte Marken an der Oberfläche des betreffenden Bauteils angebracht sein, vorteilhafterweise als Strichmarke oder als Strichcode, der aus mehreren Strichteilmarken zusammengesetzt ist. Falls eine oder beide Marken jeweils als Strichcode aus mehreren Strichteilmarken zusammengesetzt ist, werden für die einzelnen Strichteilmarken gerade Linien bevorzugt, und die mehreren Strichteilmarken der zusammengesetzten Marke weisen vorzugsweise winkelig zueinander. Einzelne Strichmarken oder aus Strichteilmarken zusammengesetzte Marken können auch als Schlitz geformt sein.

Werden die Bauteile in der Fügeposition an wenigstens drei Stellen parallel zu dieser Rotationsachse gegeneinandergepresst, ist die Fügeposition bereits bestimmt, wenn die Bauteile steif wären. Bei nicht verwindungssteifen Bauteilen, auf deren Positionieren und Spannen die Erfindung in erster Linie gerichtet ist, sind diese Bauteile vorzugsweise jeweils mit Marken der genannten Art an zwei oder gegebenenfalls noch mehr Markierungsstellen versehen. Zwei oder mehr Paare jeweils aus einer ersten Marke des ersten Bauteils und einer zugeordneten zweiten Marke des zweiten Bauteils, Marken jeweils der genannten Art, sind aber auch schon deshalb vorteilhaft, weil die Marken zum Zwecke der gleichzeitigen Erfassbarkeit im Vergleich zur Größe der Bauteile nur eine sehr geringe Ausdehnung aufweisen, die Markierungsstellen daher nur kleine Flächenbereiche der Bauteile sind. Relevante Abweichungen von der relativen Fügeposition der Bauteile im Ganzen gesehen können daher mit nur vergleichsweise kleinen Abweichungen bei den Marken einhergehen, die in ungünstigen Fällen messtechnisch nicht mehr erfassbar sind.

Vorteilhafte Ausgestaltungen werden auch in den Unteransprüchen und deren Kombinationen beschrieben.

Nachfolgend werden Ausführungsbeispiele der Erfindung anhand von Figuren erläutert. An den Ausführungsbeispielen offenbar werdende Merkmale bilden jeweils einzeln und in jeder Merkmalskombination die Gegenstände der Ansprüche und auch die vorstehend beschriebenen Ausgestaltungen vorteilhaft weiter. Es zeigen:
- Figur 1: ein erstes Ausführungsbeispiel einer erfindungsgemäßen Vorrichtung zum Positionieren von Bauteilen in einer Fügeposition;
- Figur 2: einen Sensor zur Erfassung einer Kraft, mit der die Bauteile in der Fügeposition gegeneinander gedrückt werden;
- Figur 3: die Bauteile in der Fügeposition und mit Marken eines ersten Ausführungsbeispiels;
- Figur 4: die Bauteile in der Fügeposition und mit Marken eines zweiten Ausführungsbeispiels;
- Figur 5: die Bauteile in der Fügeposition und mit Marken eines dritten Ausführungsbeispiels;
- Figur 6: die Bauteile in der Fügeposition und mit Marken eines vierten Ausführungsbeispiels und

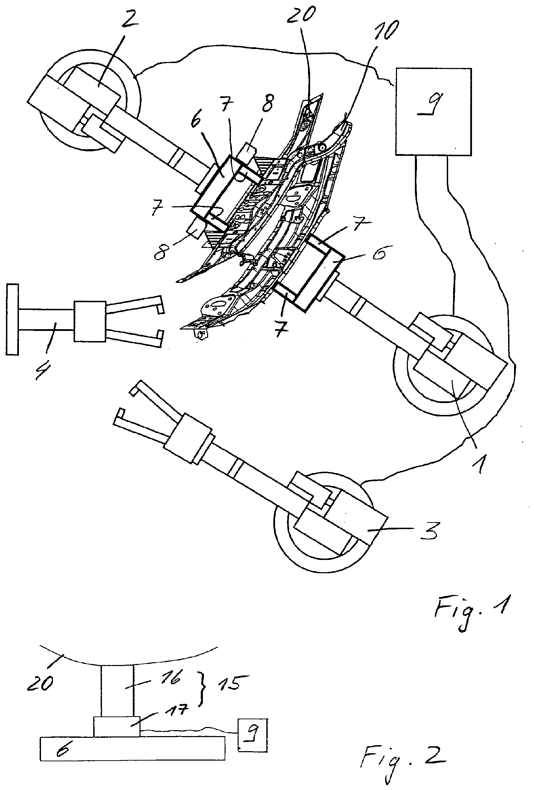

- Figur 1: ein zweites Ausführungsbeispiel einer erfindungsgemäßen Vorrichtung zum Positionieren von Bauteilen in einer Fügeposition.

Figur 1 zeigt ein erstes Ausführungsbeispiel einer Vorrichtung, mittels der zwei Bauteile 10 und 20 relativ zueinander in einer Fügeposition positionierbar und in der Fügeposition relativ zueinander fixierbar sind. Die Vorrichtung umfasst einen Halte-Roboter 1, der mittels eines Greifwerkzeugs 6 das Bauteil 10 frei im Raum hält und im gehaltenen Zustand im Raum bewegen kann. Sie umfasst ferner einen Positionier-Roboter 2, der mittels eines Greifwerkzeugs 6 das Bauteil 20 frei im Raum hält und relativ zu dem Bauteil 10 in der Fügeposition positioniert. Die Roboter 1 und 2 werden von einer Steuerung 9 im Master-Slave-Betrieb gesteuert, wobei für den Beispielfall angenommen wird, dass der Roboter 1 den bewegungsführenden Master und der Roboter 2 den bewegungsgeführten Slave bildet.

Die Roboter 1 und 2 sind in einer gemeinsamen Arbeitsstation ortsfest angeordnet. Sie weisen jeweils eine ortsfeste Basis und davon abragend einen Roboterarm auf, der in allen sechs Freiheitsgraden im Raum beweglich ist. Die Greifwerkzeuge 6 sind am Ende des Roboterarms des jeweiligen Roboters 1 und 2 vorzugsweise mittels Anschlüssen befestigt, die ein automatisches Andocken und Abdocken der Greifwerkzeuge 6 ermöglichen und hierfür die erforderlichen mechanischen Befestigungsmittel und zweckmäßigerweise auch die für den Betrieb des jeweiligen Greifwerkzeugs 6 erforderlichen Medienanschlüsse, beispielsweise für Druckluft, elektrische Energie und die Signalübertragung aufweisen.

Die Bauteile 10 und 20 sind großflächige, in sich nicht verwindungssteife und in diesem Sinne labile Schalenstrukturen. Sie können insbesondere Blechstrukturen sein oder eine oder mehrere Blechstrukturen als Bestandteil aufweisen. Im Ausführungsbeispiel handelt es sich um Karosserieteile für ein Automobil. Im gefügten Zustand bilden die Bauteile 10 und 20 eine Heckverkleidung, das Bauteil 10 eine äußere und das Bauteil 20 eine innere Teilstruktur der Heckverkleidung.

Die Greifwerkzeuge 6 weisen jeweils eine Trägerstruktur mit dem Anschluss für den Roboterarm und mehrere an der Trägerstruktur angeordnete Greifer 7 zum Aufnehmen und Halten des Bauteils 10 oder 20 auf. Die Greifer 7 können mechanische Greifer oder insbesondere Sauggreifer sein. Auch eine Kombination aus wenigstens einem mechanischen Greifer und wenigstens einem Sauggreifer ist möglich.

Am Greifwerkzeug 6 des Roboters 2 sind ferner optische Positionier-Sensoren 8 angeordnet, um bei dem Positionieren die Position des zweiten Bauteils 20 relativ zum ersten Bauteil 10 zu ermitteln. Die Sensoren 8 des Ausführungsbeispiels sind Kameras. Die Steuerung 9 steuert die Bewegungen des Roboters 2 in Abhängigkeit von Messsignalen der Sensoren 8.

In der Arbeitsstation sind ferner Fügeeinrichtungen 3 und 4 angeordnet. Die Fügeeinrichtung 3 ist ein Bearbeitungsroboter, der wie die Roboter 1 und 2 gebildet ist, statt eines Greifwerkzeugs am Ende seines Roboterarms jedoch ein Fügewerkzeug trägt, im Ausführungsbeispiel ein Schweißwerkzeug zum Punktschweißen. Die Fügeeinrichtung 4 weist ein stationäres Fügewerkzeug, beispielsweise ebenfalls ein Schweißwerkzeug zum Punktschweißen auf. Sollen die Bauteile 10 und 20 mittels der stationären Fügeeinrichtung 4 gefügt werden, müssen die Roboter 1 und 2 in aufeinander abgestimmter Weise die Bauteile 10 und 20 in der Fügeposition befindlich zur Fügeeinrichtung 4 bewegen, während bei einem Fügen mittels der Fügeeinrichtung 3 die Fügeposition im Arbeitsraum der Roboter 1 und 2 unveränderlich sein kann. Beim Fügen mit dem mobilen Fügewerkzeug der Fügeeinrichtung 3 können jedoch auch in aufeinander abgestimmter Weise sowohl die in der Fügeposition relativ zueinander fixierten Bauteile 10 und 20 als auch das Fügewerkzeug im Raum bewegt werden. Durch Bewegungen der Roboter 1 und 2 kann für das Fügewerkzeug die Zugänglichkeit zur Fügestelle oder den vorzugsweise mehreren Fügestellen der Bauteile 10 und 20 verbessert werden. Die Roboter 1, 2 und 3 bzw. die Steuerung 9 können oder kann auch dazu eingerichtet sein, mit der stationären Fügeeinrichtung 4 und dem Fügeroboter 3 gleichzeitig zu fügen. Hierbei können der Roboter 1 wieder als Master und die Roboter 2 und 3 jeweils als Slave gesteuert und bewegt werden, während beide Fügeeinrichtungen 3 und 4 zugleich fügen.

Die Steuerung 9 dient als übergeordnete Steuerung, die beim Positionieren und Fixieren der Bauteile 10 und 20 die Roboter 1 und 2 und beim Fügen auch noch den Roboter 3 bezüglich der Roboterbewegungen abgestimmt steuert. Sie kann ferner dahingehend weitergebildet sein, dass sie auch die Fügeoperationen, im Ausführungsbeispiel die einzelnen Schweißvorgänge, steuert, d.h. den jeweiligen Schweißbefehl ausgibt. In solch einer Weiterbildung kann auch das stationäre Fügewerkzeug der Fügeeinrichtung 4 im Steuerungskreis der Steuerung 9 angeordnet sein.

Der geführte Roboter 2 ist zu einem taktil fühlenden Roboter weiterentwickelt, indem am Greifwerkzeug 6 mehrere Sensoren angeordnet sind, mit denen jeweils eine Kraft ermittelt werden kann, mit der die Bauteile 10 und 20 in der Fügeposition gegeneinander gedrückt werden. Die Sensoren sind als Kraftsensoren gebildet.

Figur 2 zeigt einen der Kraftsensoren 15 stellvertretend auch für die anderen. Der Sensor 15 umfasst einen Stössel 16 und eine Führung bei 17, die den Stössel 16 linear längs einer Achse führt, die von der Trägerstruktur des Greifwerkzeugs 6 weg in Richtung auf das vom Greifwerkzeug 6 gehaltene Bauteil 20 weist. Der Stössel 16 ist in Richtung seiner Beweglichkeit federelastisch abgestützt, beispielsweise mittels einer mechanischen Feder oder pneumatisch. Ferner ist er über einen Kraftaufnehmer 17 an der Trägerstruktur des Greifwerkzeugs 6 abgestützt. Er bildet somit das Eingangselement des Sensors 15. Der Kraftaufnehmer 17 ist mit der Steuerung 9 verbunden. Der Stössel 16 kann auch quasi starr nur über den Kraftaufnehmer 17 an dem Greifwerkzeug 6 abgestützt sein, eine gewisse, wenn auch geringe Beweglichkeit ist für die Beaufschlagung des Kraftaufnehmers 17 jedoch von Vorteil. So kann der Kraftaufnehmer 17 beispielsweise ein Dehnmess-Aufnehmer sein. Die Beweglichkeit des Stössels 16 kann sich in solch einer Ausführung auf das Ausmaß der elastischen Verformung des Kraftaufnehmers 17 beschränken. Es kann oder können auch ein oder mehrere Stössel 16 ohne Kraftaufnehmer am Greifwerkzeug 6 zusätzlich angeordnet sein.

Beim Positionieren der Bauteile 10 und 20 drückt der Roboter 2 das Bauteil 20 gegen das Bauteil 10 bis eine vorgegebene Anpresskraft, die vorzugsweise für alle Sensoren 15 die gleiche ist, grundsätzlich aber auch für die Sensoren 15 individuell vorgegeben sein kann, erreicht ist. Die Sensoren 15 sind vorteilhafterweise am Greifwerkzeug 6 so angeordnet, dass sie nahe bei oder unmittelbar im Kontaktbereich der Bauteile 10 und 20, vorzugsweise im Fügebereich, gegen die Rückseite des Bauteils 20 drücken. Die Stössel 16 können neben den Greifern 7, auch in größeren Abständen von den Greifern 7 an der Trägerstruktur des Greifwerkzteugs 6 angeordnet sein. Handelt es sich bei den Greifern 7 um Sauggreifer, können die Stössel 16 auch innerhalb der Sauggreifer angeordnet sein, wie dies beispielsweise durch die EP 1 256 421 B1 offenbart wird. In vielen Anwendungsfällen wird es jedoch vorteilhaft sein, dass Bauteil 10 an einem oder mehreren ersten Orten mittels einem oder mehreren Greifern 7 zu halten und an einem oder mehreren anderen Orten, zweckmäßigerweise so nah als möglich bei den Fügestellen, mit den Stösseln 16 zu beaufschlagen. Die Stössel 16 sind Kontursteine, die jeweils am freien Ende an die lokale Kontur des Bauteils 20 am Ort des Andrückens angepasst geformt sind.

In Anwendungen, in denen die Bauteile 10 und 20 nur von geringer Formtreue sind, andererseits aber hohe Anforderungen an eine exakte Positionierung in der Fügeposition gestellt werden, wie dies beim Fügen von Karosserieteilen oder Anbauteilen für Fahrzeugkarosserien häufig der Fall ist, werden die Bauteile 10 und 20 mit aufeinander abgestimmten Marken für die optische Erfassung mittels der Sensoren 8 versehen. Dies kann noch in einem formgebenden Werkzeug geschehen, beispielsweise einer Tiefziehpresse für Blechstrukturen, oder in einer der Urformung nachgelagerten Prozessstufe. Die Bauteile 10 und 20 bilden in diesem Sinne ein System von Bauteilen, die speziell für das Positionieren in der Fügeposition je mit wenigstens einer optisch erfassbaren Marke versehen sind.

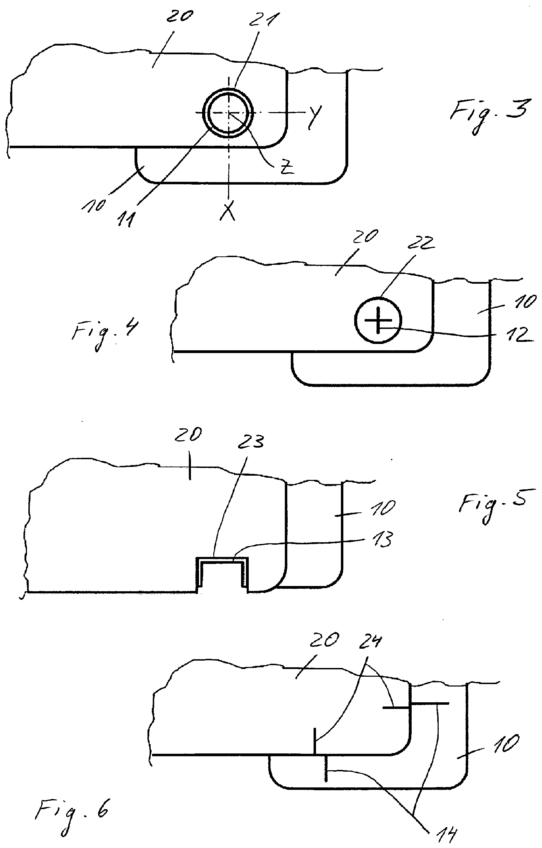

Figur 3 zeigt ein erstes Beispiel eines Paares von aufeinander abgestimmten Marken, nämlich einer ersten Marke 11 an einer Markierungsstelle des Bauteils 10 und einer zweiten Marke 21 an einer Markierungsstelle des Bauteils 20. Die Marke 11 ist eine Lochmarke, ebenso die Marke 21. In beiden Fällen handelt es sich um kreisrunde Löcher. Alternativ könnte die vom Sensor 8 aus gesehen untere Marke 11 beispielsweise als kreisrunde Linie oder als Polygon auf der die Markierungsstelle bildenden Oberfläche des Bauteils 10 ausgeführt sein. Die Markierungsstellen sind eben. In der Fügeposition liegen die Bauteile 10 und 20 mit ihren Markierungsstellen aneinander. Vom aufnehmenden Sensor 8 aus gesehen liegt die Markierungsstelle des Bauteils 20 auf der Markierungsstelle des Bauteils 10. Die Lochmarke 21 weist dementsprechend einen größeren Durchmesser als die Lochmarke 11 auf, so dass diese bei korrekter Positionierung vollständig innerhalb der Lochmarke 21 zu liegen kommt und optisch erfasst werden kann. Bei korrekter Positionierung sind die Lochmarken 11 und 21 zueinander konzentrisch. Mittels eines der Sensoren 8 werden insbesondere die Randkanten der Lochmarken 11 und 21 und deren Position relativ zueinander erfasst und mittels einer nachgeschalteten Bildverarbeitung ausgewertet.

Figur 4 zeigt ein Paar von Marken 12 und 22 eines zweiten Ausführungsbeispiels. Die Marke 22 des Bauteils 20 ist eine Lochmarke, sie entspricht der Marke 21. Die Marke 12 ist an der Markierungsstelle des Bauteils 10 auf dessen Oberfläche angebracht und ist im Ausführungsbeispiel eine zusammengesetzte Strichmarke. Die Marke 12 besteht aus zwei zueinander orthogonalen geraden Linien, die jeweils eine Strichteilmarke bilden. Bei korrekter Positionierung in der Fügeposition bildet der Kreuzungspunkt der Linien das Zentrum der Lochmarke 22. Falls das Bauteil 20 nahe bei seiner Marke 22 Randkanten aufweist, können die Linien der Strichmarke 12 insbesondere so am Bauteil 10 ausgerichtet sein, dass sie bei korrekter Positionierung in der Fügeposition parallel zu den Randkanten des Bauteils 20 weisen, so dass mittels der gleichen Messung nicht nur der Ort des Bauteils 10 relativ zum Bauteil 20 in der Draufsicht der Figur, der X,Y-Ebene, sondern auch die Ausrichtung der Bauteile 10 und 20 relativ zueinander, nämlich die Drehwinkelposition um eine zur Ebene der Draufsicht orthogonale Achse Z ermittelt und die Bauteile 10 und 20 entsprechend positioniert werden können.

Figur 5 zeigt Bauteile 10 und 20 mit aufeinander abgestimmten Marken 13 und 23 eines dritten Ausführungsbeispiels. Die Marken 13 und 23 sind wie im ersten Ausführungsbeispiel als Durchgänge durch das jeweilige Bauteil 10 oder 20 geformt. Im Unterschied zum ersten Ausführungsbeispiel werden sie von geraden Randkanten begrenzt, die winkelig zueinander weisen, beispielhaft weisen die Randkanten bei jeder der Marken 13 und 23 orthogonal zueinander. Im Ausführungsbeispiel sind die Marken 13 und 23 als Ausnehmungen bzw. Ausklinkungen am Rand der Bauteile 10 und 20 geformt und sind am jeweiligen Bauteilrand offen. Sie weisen daher drei gerade Randkanten auf, die miteinander jeweils ein "U" bilden, das zum Rand hin offen ist. Wie im ersten Ausführungsbeispiel ist die Marke 23, die vom Sensor 8 aus gesehen über der Marke 13 liegt, weiter als die Marke 13, so dass diese bei korrekter Positionierung in der Fügeposition vollständig innerhalb der Marke 23 zu liegen kommt und durch diese hindurch erfasst werden kann. Mittels des Markenpaares 13, 23 können in der X,Y-Ebene, der Draufsicht der Figur 5, der Ort und bezüglich der Z-Achse die Drehwinkelposition der Bauteile 10 und 20 relativ zueinander bestimmt werden. Die Marken 13 und 23 sind zur Vereinfachung der Positionsbestimmung am jeweiligen Bauteil 10 oder 20 so geformt, dass ihre Randkanten bei korrekter Positionierung paarweise parallel zueinander weisen und zum nächstbenachbarten parallelen Rand der jeweils anderen Marke alle den gleichen Abstand haben.

Figur 6 zeigt ein Bauteil 10 und ein Bauteil 20 mit einem Paar von aufeinander abgestimmten Marken 14 und 24 eines vierten Ausführungsbeispiels. Im vierten Ausführungsbeispiel sind beide Marken 14 und 24 jeweils auf einer Oberfläche der Markierungsstelle des jeweiligen Bauteils 10 oder 20 vorgesehen und als zusammengesetzte Strichmarke gebildet. Die Strichmarke 14 des Bauteils 10 umfasst zwei zueinander orthogonale Teilmarken. Ebenso umfasst die Strichmarke 24 des Bauteils 20 zwei zueinander orthogonale Teilmarken. Im Ausführungsbeispiel bestehen die Marken 14 und 24 jeweils aus den beiden Teilmarken. Die Marke 24 des vom Sensor 8 aus gesehen oberen Bauteils 20 sind in einem Eckbereich des Bauteils 20 angeordnet und erstrecken sich jeweils bis zu einem der beiden zueinander orthogonalen Ränder des Bauteils 20. Sie weisen jeweils im rechten Winkel zu dem betreffenden Rand. Die Teilmarken der Marke 14 sind den Teilmarken der Marke 24 zugeordnet, indem jede der Teilmarken der Marke 14 bei korrekter Positionierung parallel zur jeweils zugeordneten Teilmarke der Marke 24 weist und die Teilmarken der Marke 14 in einer Flucht zur jeweils zugeordneten Teilmarke der Marke 24 liegen. Die Bauteile 10 und 20 nehmen in Figur 6 dementsprechend noch nicht die Fügeposition ein, vielmehr muss das Bauteil 20 relativ zu dem Bauteil 10 noch ein Stück weiter nach rechts und ein kleineres Stück weiter nach oben bewegt werden. Alternativ zu einer fluchtenden Anordnung könnten die Teilmarken der Marke 14 in der Fügeposition zur jeweils zugeordneten Teilmarke der Marke 24 auch gleichabständig zu liegen kommen, eine fluchtende Anordnung kann jedoch einfacher verifiziert werden.

Die Bauteile 10 und 20 sind vorzugsweise jeweils an voneinander entfernten Markierungsstellen mit wenigstens zwei, vorzugsweise nur zwei Marken 11, 12, 13 oder 14 einerseits und 21, 22, 23 oder 24 andererseits versehen. Jedes der Markenpaare besteht aus zwei einander zugeordneten Marken. Die Markenpaare können gleich sein, beispielsweise zwei Markenpaare jeweils aus Marken 11 und 21. Sie können aber auch unterschiedlich sein, beispielsweise ein Markenpaar 11, 21 und ein weiteres Markenpaar gebildet aus den Marken 13 und 23 oder den Marken 14 und 24. Der Roboter 2 des ersten Ausführungsbeispiels ist zur Erfassung von zwei solchen Paaren einander zugeordneter Marken mit zwei der Positionier-Sensoren 8 ausgestattet, die an den Seiten des Greifwerkzeugs 6 angeordnet sind.

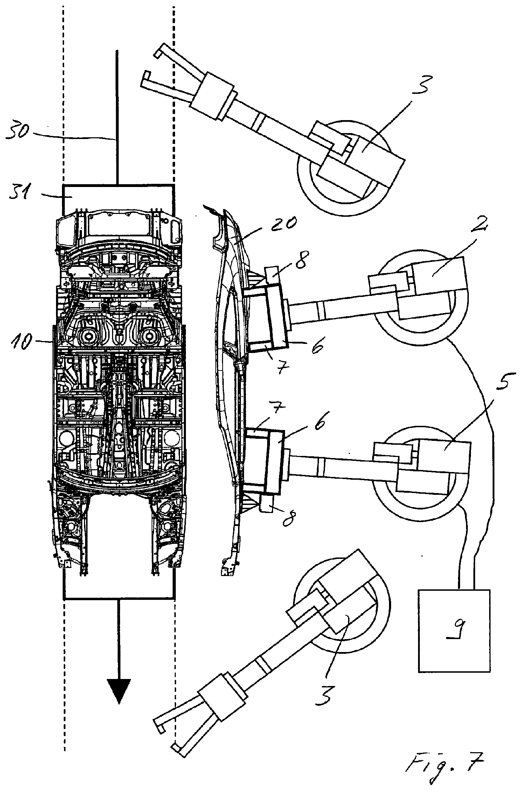

Figur 7 zeigt ein zweites Ausführungsbeispiel einer Vorrichtung, mittels der zwei Bauteile 10 und 20 relativ zueinander in einer Fügeposition positionierbar und in der Fügeposition relativ zueinander fixierbar sind. Die Vorrichtung umfasst eine Halteeinrichtung 31, die nicht von einem Roboter, sondern einer Auflage für eine Rohkarosse eines Kraftfahrzeugs gebildet wird. Die Halteeinrichtung 31 ist Bestandteil einer Fertigungslinie 30 in einer Serienfertigung von Automobilen. Das Bauteil 10 ist eine gefügte Karosserie-Bodengruppe, die auf der Halteeinrichtung 31 ruht und von dieser klemmend gehalten wird. In der Linie 30 werden Halteeinrichtungen 31 mit jeweils einem darauf ruhenden Bauteil 10 im Takt der Serienfertigung in eine Geometriestation gefördert, die in Figur 7 dargestellt ist. In der Geometriestation werden die Bauteile 10 jeweils mit weiteren Karosserieteilen, unter anderem einem linken und einem rechten Seitenteil, von denen eines das Bauteil 20 des zweiten Ausführungsbeispiels bildet, geometriebildend dauerhaft fest zu einer Rohkarosserie gefügt. Nach dem Geometriefügen werden die Rohkarosserien aus der Station heraus und in der Linie 30 in die nächste Arbeitsstation weiter gefördert. Beispielhaft ist eine Fertigungslinie 30 für Personenkraftwagen gezeigt. Stattdessen könnte es sich auch um eine Fertigungslinie für Lastkraftwagen handeln.

Das Geometriefügen ist wie im ersten Ausführungsbeispiel ein Punktschweißen. In der Geometriestation angeordnete Fügeroboter 3 sind dementsprechend mit Schweißwerkzeugen bestückt.

In der Geometriestation sind links und rechts von der Fertigungslinie 30 mehrere Positionier-Roboter angeordnet, mittels denen ein linkes und ein rechtes Seitenteil, das heißt zwei Bauteile 20, relativ zu der in der Geometriestation befindlichen Bodengruppe 10 in jeweils einer Fügeposition positioniert und fixiert werden. Dargestellt ist nur eines der beiden Seitenteile 20 und ein Paar von Positionier-Robotern 2 und 5 für die Positionierung dieses Bauteils 20. Die Fixierung in der Fügeposition wird wie im ersten Ausführungsbeispiel ohne Spannrahmen durchgeführt, nur durch Andrücken der Seitenteile 20 an die Bodengruppe 10 und ein optional in der gleichen Station ebenfalls zu fügendes Dach, das in Figur 7 allerdings nicht dargestellt ist. Durch das Andrücken werden die Seitenteile beziehungsweise Bauteile 20 in der Fügeposition mit der Bodengruppe 10 und optional einem Dach gespannt, nämlich wie im ersten Ausführungsbeispiel durch Kontakt nur der Bauteile 10 und 20, optional zusätzlich noch dem Dach.

Die Positionier-Roboter 2 und 5 entsprechen von einem Unterschied abgesehen jeweils dem Positionier-Roboter 2 des ersten Ausführungsbeispiels. Im Unterschied zu diesem ist an den Greifwerkzeugen 6 der Positionier-Roboter 2 und 5 jeweils nur ein einziger Positionier-Sensor 8 angeordnet. Das Bauteil 20 ist im Erfassungbereich der Sensoren 8 mit jeweils einer zweiten Marke, beispielsweise einer der Marken 21, 22, 23 und 24 versehen, insgesamt also zwei dieser Marken, die gleich oder unterschiedlich sein können. Das Bauteil 10 ist an der Seite, an der es mit dem Bauteil 20 gefügt werden soll, mit zwei auf die Marken des Bauteils 22 abgestimmten Marken versehen. Die Positionier-Roboter 2 und 5 sind in gleicher Weise wie der Positionier-Roboter 2 des ersten Ausführungsbeispiels jeweils zu einem taktil fühlenden Roboter weiterentwickelt. Hinsichtlich der Positionierung mittels der beiden Positionier-Sensoren 8 und der beiden Paare von aufeinander abgestimmten Marken und dem Andrücken in der Fügeposition bis auf die für die einzelnen Messstellen der Kraftsensoren 15 vorgegebenen Kraftwerte wird auf die Ausführung zum ersten Ausführungsbeispiel verwiesen.

Im Unterschied zum ersten Ausführungsbeispiel steuert die Steuerung 9 die Positionier-Roboter 2 und 5, so dass diese gleichzeitig mit ihren Greifwerkzeugen 6 das Bauteil 20 haltend aufeinander abgestimmte Bewegungen ausführen. Die Positionier-Roboter 2 und 5 werden vorzugsweise in einem Master-Slave-Modus mittels der Steuerung 9 gesteuert. Einer dieser Roboter 2 und 5, beispielsweise der Roboter 2, ist der Master und der andere der in Abhängigkeit von den Bewegungen des Masters geführte Slave.

Bei dem Positionieren bewegen die Positionier-Roboter 2 und 5 das Bauteil 20 in von der Steuerung 9 koordinierter Weise, vorzugsweise im genannten Master-Slave-Modus, auf einer vorgegebenen Trajektorie bis unmittelbar vor den Kontakt mit dem Bauteil 10. In einer Annäherungsphase steuert die Steuerung 9 die Bewegungen der Roboter 2 und 5 in Abhängigkeit von den Ausgangssignalen der Sensoren 8. In einem Master-Slave-Betrieb erfolgt diese Annäherungssteuerung beispielsweise zunächst in Abhängigkeit nur von den Signalen des Sensors 8 des Masters, beispielsweise des Roboters 2. In einer sich anschließenden nächsten Phase, in der vorzugsweise immer noch kein Kontakt zwischen den Bauteilen 10 und 20 besteht, wird der Roboter 5 anhand der Messsignale seines Sensors 8 nachgeführt, bis auch die diesem Sensor 8 zugeordneten Marken in einer der Fügeposition entsprechenden oder nahezu entsprechenden relativen Position zueinander sind.

Im nächsten Schritt wird das Bauteil 20 in Kontakt mit dem Bauteil 10 gebracht. Im Kontakt werden weiterhin die Paare von Marken mittels der Sensoren 8 erfasst und die Ausgangssignale der Sensoren 8 nach entsprechender Bildverarbeitung der Steuerung 9 als Regelsignale aufgegeben. Im Kontakt kann mit noch sehr geringer Andrückkraft die endgültige Relativposition der Bauteile 10 und 20, die Fügeposition, gefunden werden. Sobald die Steuerung 9 auf der Basis der Signale der Sensoren 8 festgestellt hat, dass die Fügeposition erreicht ist, wird die Andrückkraft erhöht. Dies geschieht feinfühlig bis die mehreren Kraftsensoren 15 (Figur 2) der Greifwerkzeuge 6 den vorgegebenen Kraftwerten entsprechende Ausgangssignale liefern. Wenn die Bauteile 10 und 20 auf diese Weise relativ zueinander die Fügeposition einnehmen und durch das Andrücken der Roboter 2 und 5 nur in beiderseitigem Bauteilkontakt gespannt sind, wird das Geometriefügen durchgeführt, im Beispielfall durch Punktschweißen mittels der Fügeroboter 3.

Das Positionieren und Spannen der Bauteile 10 und 20 läuft im ersten Ausführungsbeispiel in gleicher Weise ab, wobei dort allerdings der Positionier-Roboter 2 im Master-Slave-Modus mit dem Halte-Roboter 1 betrieben wird und die Paare von aufeinander abgestimmten Marken mit den beiden an seinem Greifwerkzeug 6 angeordneten Positionier-Sensoren 8 erfasst.

### Bezugszeichen:

- 1: Halteeinrichtung, Halte-Roboter
- 2: Positionier-Roboter
- 3: Fügeroboter
- 4: Stationäre Fügeeinrichtung
- 5: Positionier-Roboter
- 6: Greifwerkzeug
- 7: Greifer
- 8: Positionier-Sensor
- 9: Steuerung
- 10: Bauteil
- 11: Marke
- 12: Marke
- 13: Marke
- 14: Marke
- 15: Kraftsensor
- 16: Stössel
- 17: Kraftaufnehmer
- 18: -
- 19: -
- 20: Bauteil
- 21: Marke
- 22: Marke
- 23: Marke
- 24: Marke
- 25-29: -
- 30: Fertigungslinie
- 31: Halteeinrichtung
- X: Translationsachse
- Y: Translationsachse
- Z: Rotationsachse, Andrückachse

## Patentansprüche

1. Verfahren zum Fügen von Bauteilen, bei dem
a) eine Halteeinrichtung (1; 31) ein erstes Bauteil (10) hält,
b) ein Positionier-Roboter (2; 2, 5) ein zweites Bauteil (20) relativ zu dem ersten Bauteil (10) in einer Fügeposition positioniert und in der Fügeposition gegen das erste Bauteil (10) drückt,
c) die Bauteile (10, 20) mittels des Positionier-Roboters (2; 2, 5) durch Kontakt nur der Bauteile (10, 20) in der Fügeposition gegeneinander gespannt werden,
d) und die Bauteile (10, 20) in der relativ zueinander nur durch den Bauteilkontakt bestimmten Fügeposition gefügt werden,
**wobei**
e1) das erste Bauteil (10) an einer Markierungsstelle mit einer ersten Marke (11; 12; 13; 14) und das zweite Bauteil (20) an einer Markierungsstelle, die vorzugsweise kongruent zu der Markierungsstelle des ersten Bauteils (10) geformt ist, mit einer zweiten Marke (21; 22; 23; 24) versehen ist,
e2) die Marken (11, 21; 12, 22; 13, 23; 14, 24) bei dem Positionieren der Bauteile (10, 20) mittels eines Sensors (8) erfasst werden,
e3) die Position, die die erste Marke (11; 12; 13; 14) relativ zu der zweiten Marke (21; 22; 23; 24) einnimmt, ermittelt wird,
e4) der oder die Roboter (1; 1, 2; 2, 5) die Bauteile (10, 20) in Abhängigkeit von der ermittelten Relativposition der Marken (11, 21; 12, 22; 13, 23; 14, 24) in der Fügeposition positioniert oder positionieren, wobei
e5) die Markierungsstellen in der Fügeposition miteinander in Kontakt gebracht werden
e6) und die Position, die die erste Marke (11; 12; 13; 14) relativ zu der zweiten Marke (21; 22; 23; 24) einnimmt, im Kontakt der Markierungsstellen sensorisch erfasst und ermittelt wird.

2. Verfahren nach dem vorhergehenden Anspruch, bei dem die Bauteile Teilstrukturen von Fahrzeugkarosserien oder Teilstrukturen von Anbauteilen von Fahrzeugkarosserien sind.

3. Verfahren nach einem der vorhergehenden Ansprüche, bei dem die Marken (11, 21; 12, 22; 13, 23; 14, 24) so gestaltet und die Markierungsstellen der Bauteile (10, 20) so gewählt sind, dass die Marken zumindest in der Fügeposition gleichzeitig und vorzugsweise jeweils vollständig von nur einem einzigen Sensor (8) erfasst werden können, wobei die Marken (11, 21; 12, 22; 13, 23; 14, 24) vorzugsweise so gestaltet sind, dass anhand ihres Abstands voneinander, vorzugsweise auch ihrer Ausrichtung relativ zueinander, die relative Position der Markierungsstellen in Bezug auf mehrere Translationsachsen (X, Y) und vorzugsweise auch in Bezug auf eine zu den Translationsachsen orthogonale Rotationsachse (Z) bestimmbar ist.

4. Verfahren nach einem der vorhergehenden Ansprüche, **dadurch gekennzeichnet, dass** die zweite Marke (21; 22; 23) im zweiten Bauteil (20), vorzugsweise in einem ebenen oder zumindest flachen Bereich des zweiten Bauteils (20), als Durchgang mit einer um den Durchgang erstreckten Randkante geformt ist und die erste Marke (11; 12; 13) zumindest in der Fügeposition der Bauteile (10, 20) durch den Durchgang optisch erfasst wird.

5. Verfahren nach dem vorhergehenden Anspruch, **dadurch gekennzeichnet, dass** die erste Marke (11; 13) im ersten Bauteil (10) ebenfalls als Durchgang mit einer um diesen Durchgang erstreckten Randkante geformt ist und Abstände der Randkanten der ersten Marke (11; 13) von Randkanten der zweiten Marke (21; 23) erfasst werden.

6. Verfahren nach einem der vorhergehenden Ansprüche, **dadurch gekennzeichnet, dass** wenigstens eine (12; 13, 23; 14; 24) der Marken als Durchgang oder auf einer Oberfläche ihres Bauteils (10, 20) geformt oder angebracht ist und zueinander winkelig weisende, vorzugsweise gerade Randkanten oder Linien beinhaltet.

7. Verfahren nach einem der vorhergehenden Ansprüche, **dadurch gekennzeichnet, dass** sich die zweite Marke (24) bis oder zumindest bis nahe zu einem Rand des zweiten Bauteils (20) erstreckt und die erste Marke (14) in der Fügeposition neben dem Rand des zweiten Bauteils (20) bei der zweiten Marke (24) angeordnet ist, vorzugsweise in einer axialen Verlängerung der zweiten Marke (24).

8. Verfahren nach einem der vorhergehenden Ansprüche, bei dem die an den Bauteilen (10, 20) erzeugte Marken (11, 21; 12, 22; 13, 23; 14, 24), optisch erfasst, die Position, die die Bauteile (10, 20) relativ zueinander einnehmen, mittels Bildverarbeitung ermittelt und diese relative Position der Bauteile (10, 20) in Abhängigkeit von dem Ergebnis der Bildverarbeitung verändert wird, bis die Fügeposition erreicht ist.

9. Verfahren nach einem der vorhergehenden Ansprüche, bei dem die Halteeinrichtung (31) in einer Fertigungslinie (30) einer Serienfertigung von Fahrzeugen gefördert wird, die Bauteile (10, 20) Teilstrukturen einer Rohkarosse eines der Fahrzeuge sind, vorzugsweise ein von der Halteeinrichtung (31) gehaltener Unterbau und ein vom Positionier-Roboter (2; 2, 5) gehaltenes Seitenteil, der Positionier-Roboter (2; 2, 5) das zweite Bauteil (20) in einer Geometriestation der Fertigungslinie (30) in der Fügeposition positioniert und die Bauteile (10, 20) in der Geometriestation dauerhaft fest gefügt werden, vorzugsweise durch Schweißen, Durchsetzfügen oder Stanznieten.

10. Verfahren nach einem der vorhergehenden Ansprüche, bei dem wenigstens zwei Positionier-Roboter (2, 5) das zweite Bauteil (20) gemeinsam halten, in ihren Bewegungen aufeinander abgestimmt in der Fügeposition positionieren und in dem Kontakt nur der Bauteile (10, 20) gegen das erste Bauteil (10) spannen.

11. Verfahren nach einem der vorhergehenden Ansprüche, bei dem die Position, die die Bauteile (10, 20) bei dem Positionieren relativ zueinander einnehmen, mittels eines mit der Steuerung (9) verbundenen, an dem Roboter (2; 1, 2; 2, 5), vorzugsweise an einem Greifwerkzeug (6) des Roboters angeordneten Positionssensors (8), vorzugsweise Kamera, erfasst wird.

12. Verfahren nach einem der vorhergehenden Ansprüche, bei dem eine Anpresskraft ermittelt wird, mit der die Bauteile (10, 20) gegeneinandergedrückt werden, die ermittelte Anpresskraft mit einem Sollwert für die Kraft verglichen und die Anpresskraft in Abhängigkeit von dem Vergleich auf den Sollwert eingestellt wird.

13. Verfahren nach einem der vorhergehenden Ansprüche, bei dem eine Kraft, mit der die Bauteile (10, 20) gegeneinander gespannt sind, mittels eines mit der Steuerung (9) verbundenen, an dem Roboter (2; 1, 2; 2, 5), vorzugsweise an einem Greifwerkzeug (6) des Roboters angeordneten Kraftsensors (15) erfasst wird.

## Claims

1. A method for joining component parts, wherein:
a) a holding device (1; 31) holds a first component part (10);
b) a positioning robot (2; 2, 5) positions a second component part (20) in a joining position relative to the first component part (10) and presses it against the first component part (10) in the joining position;
c) the component parts (10, 20) are tensed against each other in the joining position by contact between the component parts (10, 20) only;
d) and the component parts (10, 20) are joined in the joining position which is determined only by the component parts' contact relative to each other,
**wherein**
e1) the first component part (10) is provided with a first mark (11; 12; 13; 14) at a marking location, and the second component part (20) is provided with a second mark (21; 22; 23; 24) at a marking location which is preferably formed congruently with the marking location of the first component part (10);
e2) the marks (11, 21; 12, 22; 13, 23; 14, 24) are detected by means of a sensor (8) when positioning the component parts (10, 20);
e3) the position which the first mark (11; 12; 13; 14) assumes relative to the second mark (21; 22; 23; 24) is ascertained;
e4) the robot or robots (1; 1, 2; 2, 5) positions or position the component parts (10, 20) in the joining position in accordance with the ascertained relative position of the marks (11, 21; 12, 22; 13, 23; 14, 24), wherein
e5) the marking locations are brought into contact with each other in the joining position,
e6) and the position which the first mark (11; 12; 13; 14) assumes relative to the second mark (21; 22; 23; 24) is detected by sensor and ascertained while the marking locations are in contact.

2. The method according to the preceding claim, wherein the component parts are partial structures of vehicle bodies or partial structures of attachment parts of vehicle bodies.

3. The method according to any one of the preceding claims, wherein the marks (11, 21; 12, 22; 13, 23; 14, 24) are configured and the marking locations of the component parts (10, 20) are chosen such that the marks can be detected simultaneously and preferably each entirely by only one sensor (8), at least in the joining position, wherein the marks (11, 21; 12, 22; 13, 23; 14, 24) are preferably configured such that the relative position of the marking locations can be determined in relation to multiple translational axes (X, Y) and preferably also in relation to a rotational axis (Z), which is orthogonal to the translational axes, on the basis of their distance from each other and preferably also their orientation relative to each other.

4. The method according to any one of the preceding claims, **characterised in that** the second mark (21; 22; 23) is formed in the second component part (20), preferably in a planar or at least flat region of the second component part (20), as a passage comprising a peripheral edge extending around the passage, and the first mark (11; 12; 13) is optically detected through the passage, at least when the component parts (10, 20) are in the joining position.

5. The method according to the preceding claim, **characterised in that** the first mark (11; 13) is formed in the first component part (10), likewise as a passage comprising a peripheral edge extending around said passage, and distances between the peripheral edges of the first mark (11; 13) and peripheral edges of the second mark (21; 23) are detected.

6. The method according to any one of the preceding claims, **characterised in that** at least one (12; 13, 23; 14, 24) of the marks is formed as a passage or attached on a surface of its component part (10, 20) and includes peripheral edges or lines which are preferably straight and which point at an angle to each other.

7. The method according to any one of the preceding claims, **characterised in that** the second mark (24) extends up to or at least almost up to a periphery of the second component part (20), and the first mark (14) is arranged at the second mark (24) next to the periphery of the second component part (20), preferably in an axial extension of the second mark (24), in the joining position.

8. The method according to any one of the preceding claims, wherein: the marks (11, 21; 12, 22; 13, 23; 14, 24) produced on the component parts (10, 20) are optically detected; the position which the component parts (10, 20) assume relative to each other is ascertained by means of image processing; and this relative position of the component parts (10, 20) is altered in accordance with the result of image processing until the joining position is reached.

9. The method according to any one of the preceding claims, wherein: the holding device (31) is conveyed in a production line (30) of a series production of vehicles; the component parts (10, 20) are partial structures of a body shell of one of the vehicles, preferably a lower structure held by the holding device (31) and a side part held by the positioning robot (2; 2, 5); the positioning robot (2; 2, 5) positions the second component part (20) in the joining position in a geometry station of the production line (30); and the component parts (10, 20) are fixedly and permanently joined in the geometry station, preferably by welding, clinching or punch riveting.

10. The method according to any one of the preceding claims, wherein at least two positioning robots (2, 5) collectively hold the second component part (20), position it in the joining position by their movements in concert with each other, and tense it against the first component part (10) while only the component parts (10, 20) are in contact.

11. The method according to any one of the preceding claims, wherein the position which the component parts (10, 20) assume relative to each other during positioning is detected by means of a position sensor (8), preferably a camera, which is connected to a controller (9) and arranged on the robot (2; 1, 2; 2, 5), preferably on a gripping tool (6) of the robot.

12. The method according to any one of the preceding claims, wherein: a pressing force with which the component parts (10, 20) are pressed against each other is ascertained; the ascertained pressing force is compared to a target value for the force; and the pressing force is set to the target value in accordance with the comparison.

13. The method according to any one of the preceding claims, wherein a force with which the component parts (10, 20) are tensed against each other is detected by means of a force sensor (15) which is connected to the controller (9) and arranged on the robot (2; 1, 2; 2, 5), preferably on a gripping tool (6) of the robot.

## Revendications

1. Procédé destiné à joindre des composants, dans lequel
a) un dispositif de maintien (1 ; 31) maintient un premier composant (10),
b) un robot-positionneur (2 ; 2, 5) positionne un second composant (20) par rapport au premier composant (10) dans une position de jointement et le presse dans la position de jointement contre le premier composant (10),
c) les composants (10, 20) sont serrés l'un contre l'autre à l'aide du robot-positionneur (2 ; 2, 5) par le contact uniquement des composants (10, 20) dans la position de jointement,
d) et les composants (10, 20) sont jointoyés dans la position de jointement l'un par rapport à l'autre définie uniquement par le contact des composants,
**dans lequel**
e1) le premier composant (10) est muni d'une première marque (11 ; 12 ; 13 ; 14) sur une position de marquage et le second composant (20) est muni d'une seconde marque (21 ; 22 ; 23 ; 24) sur une position de marquage qui est formée de préférence de manière congruente à la position de marquage du premier composant (10),
e2) les marques (11, 21 ; 12, 22 ; 13, 23 ; 14, 24) sont enregistrées à l'aide d'un capteur (8) lors du positionnement des composants (10, 20),
e3) la position que prend la première marque (11 ; 12 ; 13 ; 14) par rapport à la seconde marque (21 ; 22 ; 23 ; 24), est déterminée,
e4) le ou les robots (1 ; 1, 2 ; 2, 5) positionne ou positionnent les composants (10, 20) dans la position de jointement en fonction de la position relative déterminée des marques (11, 21 ; 12, 22 ; 13, 23 ; 14, 24), dans lequel
e5) les positions de marquage sont amenées en contact l'une avec l'autre dans la position de jointement
e6) et la position que la première marque (11 ; 12 ; 13 ; 14) prend par rapport à la seconde marque (21 ; 22 ; 23 ; 24) au contact des positions de marquage est détectée et déterminée par capteur.

2. Procédé selon la revendication précédente, dans lequel les composants sont des structures partielles de carrosseries de véhicule ou des structures partielles de pièces de montage additionnelles de carrosseries de véhicule.

3. Procédé selon une des revendications précédentes, dans lequel les marques (11, 21 ; 12, 22 ; 13, 23 ; 14, 24) sont façonnées et les positions de marquage des composants (10, 20) sont choisies de telle sorte que les marques peuvent être détectées au moins dans la position de jointement simultanément et de préférence à chaque fois intégralement par un seul capteur (8), dans lequel les marques (11, 21 ; 12, 22 ; 13, 23 ; 14, 24) sont façonnées de préférence de telle sorte que, à partir de leur écartement l'une de l'autre, de préférence également à partir de leur orientation relative l'une par rapport à l'autre, la position relative des positions de marquage peut être définie par rapport à plusieurs axes de translation (X, Y) et de préférence également par rapport à un axe de rotation (Z) orthogonal aux axes de translation.

4. Procédé selon une des revendications précédentes, **caractérisé en ce que** la seconde marque (21 ; 22 ; 23) dans le second composant (20), de préférence dans une zone plane ou au moins plate du second composant (20), est formée sous la forme d'un passage avec un bord extérieur s'étendant autour du passage et la première marque (11 ; 12 ; 13) est détectée optiquement à travers le passage au moins dans la position de jointement des composants (10, 20).

5. Procédé selon la revendication précédente, **caractérisé en ce que** la première marque (11 ; 13) dans le premier composant (10) est également formée sous la forme d'un passage avec un bord extérieur s'étendant autour de ce passage et des écartements des bords extérieurs de la première marque (11 ; 13) aux bords extérieurs de la seconde marque (21 ; 23) sont détectés.

6. Procédé selon une des revendications précédentes, **caractérisé en ce qu'**au moins une (12 ; 13, 23 ; 14 ; 24) des marques est formée ou appliquée sous la forme d'un passage ou sur une surface de leurs composants (10, 20) et comporte des bords extérieurs ou lignes angulaires les un(e)s par rapport aux autres, de préférence droit(e)s.

7. Procédé selon une des revendications précédentes, **caractérisé en ce que** la seconde marque (24) s'étend jusqu'à un bord du second composant (20) ou au moins jusqu'à proximité de ce bord et la première marque (14) est disposée dans la position de jointement à côté du bord du second composant (20) auprès de la seconde marque (24), de préférence dans un prolongement axial de la seconde marque (24).

8. Procédé selon une des revendications précédentes, dans lequel les marques (11, 21 ; 12, 22 ; 13, 23 ; 14, 24) produites sur les composants (10, 20) sont détectées optiquement, la position, que prennent les composants (10, 20) les uns par rapport aux autres, est déterminée à l'aide d'un traitement d'image et cette position relative des composants (10, 20) est modifiée en fonction du résultat du traitement d'image jusqu'à ce que la position de jointement soit atteinte.

9. Procédé selon une des revendications précédentes, dans lequel le dispositif de maintien (31) est transféré dans une ligne de fabrication (30) d'une fabrication de véhicules en série, les composants (10, 20) sont des structures partielles d'une caisse de carrosserie d'un des véhicules, de préférence, un bâti maintenu par le dispositif de maintien (31) et une pièce latérale maintenue par le robot-positionneur (2 ; 2, 5), le robot-positionneur (2 ; 2, 5) positionne dans la position de jointement le second composant (20) dans un poste de géométrie de la ligne de fabrication (30) et les composants (10, 20) sont jointoyés dans le poste de géométrie de manière durable été fixe, de préférence par soudage, jogglinage ou rivetage.

10. Procédé selon une des revendications précédentes, dans lequel au moins deux robots-positionneurs (2, 5) maintiennent ensemble le second composant (20), le positionnent dans la position de jointement de manière coordonnée l'un avec l'autre dans leurs déplacements et le serrent contre le premier composant (10) uniquement en contact des composants (10, 20).

11. Procédé selon une des revendications précédentes, dans lequel la position, que prennent les composants (10, 20) lors du positionnement l'un par rapport à l'autre, est détectée à l'aide d'un capteur de position (8), de préférence une caméra, relié(e) à la commande (9) et disposé(e) sur le robot (2 ; 1, 2 ; 2, 5), de préférence sur un outil de préhension (6) du robot.

12. Procédé selon une des revendications précédentes, dans lequel une force de serrage est déterminée, laquelle permet de presser les composants (10, 20) l'un contre l'autre, la force de serrage déterminée est comparée à une valeur de consigne pour la force et la force de serrage est réglée sur la valeur de consigne en fonction de la comparaison.

13. Procédé selon une des revendications précédentes, dans lequel une force, qui permet de serrer les composants (10, 20) l'un contre l'autre, est détectée à l'aide d'un capteur de force (15) relié à la commande (9) et disposé sur le robot (2 ; 1, 2 ; 2, 5), de préférence sur un outil de préhension (6) du robot.
